(19) Europäisches Patentamt / European Patent Office / Office européen des brevets

(11) **EP 3 634 797 B1**

(12) **FASCICULE DE BREVET EUROPEEN**

(45) Date de publication et mention de la délivrance du brevet:
**11.08.2021 Bulletin 2021/32**

(21) Numéro de dépôt: **18719966.6**

(22) Date de dépôt: **11.04.2018**

(51) Int Cl.:
*B60K 1/02* (2006.01)    *B60K 6/36* (2007.10)
*B60K 6/48* (2007.10)    *B60K 6/547* (2007.10)
*B60W 10/08* (2006.01)    *B60W 10/11* (2012.01)
*B60W 20/00* (2016.01)    *B60W 30/19* (2012.01)
*F16H 3/00* (2006.01)    *B60W 50/00* (2006.01)

(86) Numéro de dépôt international:
**PCT/FR2018/050913**

(87) Numéro de publication internationale:
**WO 2018/224742 (13.12.2018 Gazette 2018/50)**

(54) **PROCÉDÉ D'ÉLABORATION D'UNE CONSIGNE DE COUPLE AUX MACHINES ÉLECTRIQUES D'UN GROUPE MOTOPROPULSEUR DE VÉHICULE ET GROUPE MOTOPROPULSEUR DE VÉHICULE**

VERFAHREN ZUR ERZEUGUNG EINES DREHMOMENTSOLLWERTS FÜR ELEKTRISCHE MASCHINEN EINES ANTRIEBSSTRANGS EINES FAHRZEUGS UND ANTRIEBSSTRANG EINES FAHRZEUGS

METHOD FOR GENERATING A TORQUE SETPOINT FOR THE ELECTRIC MACHINES OF A POWERTRAIN OF A VEHICLE AND POWERTRAIN OF A VEHICLE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **09.06.2017 FR 1755192**

(43) Date de publication de la demande:
**15.04.2020 Bulletin 2020/16**

(73) Titulaires:
• **Renault S.A.S.**
  **92100 Boulogne-Billancourt (FR)**
• **NISSAN MOTOR CO., LTD.**
  **Yokohama-shi, Kanagawa 221-0023 (JP)**

(72) Inventeurs:
• **BEN BELDI, Nesrine**
  **75017 Paris (FR)**
• **MERIENNE, Ludovic**
  **91190 Gif-sur-Yvette (FR)**

(74) Mandataire: **Rougemont, Bernard**
**Renault s.a.s**
**TCR GRA 2 36 - Sce 00267**
**1, Avenue du Golf**
**78084 Guyancourt Cedex (FR)**

(56) Documents cités:
FR-A1- 2 799 163    FR-A1- 2 954 253
FR-A1- 3 007 696

**Description**

L'invention concerne le contrôle des transmissions automatiques de groupe motopropulseur (GMP) de véhicule, électrique ou hybride, comportant une boîte de vitesses qui regroupe le couple de plusieurs actionneurs (moteurs thermiques et machines électriques) en direction des roues du véhicule, sur différents rapports de transmission, par l'intermédiaire d'un différentiel.

Plus précisément, elle a pour objet un procédé d'élaboration d'une consigne de couple aux machines électriques d'un groupe motopropulseur de véhicule, comportant au moins une boîte de vitesses à crabots pilotés, une machine électrique principale pouvant transmettre du couple aux roues du véhicule sur deux rapports de boîte distincts, et une machine électrique secondaire capable fournir un couple de compensation à la roue pendant les changements de rapport de la machine principale. Dans ce procédé, les couples maximum et minimum imposés aux deux machines électriques en rapport établi, sont calculés en fonction d'un état prévisionnel à terme, d'une batterie d'alimentation commune.

L'invention a également pour objet un groupe motopropulseur électrique de véhicule, comportant au moins une boîte de vitesses à crabots pilotés, une machine électrique principale (ME) pouvant transmettre du couple aux roues du véhicule sur deux rapports de boîte distincts, et une machine électrique secondaire (HSG).

Elle a également pour objet un groupe motopropulseur hybride de véhicule, comportant au moins une boîte de vitesses à crabots pilotés, un moteur thermique, une machine électrique principale (ME) pouvant transmettre du couple aux roues du véhicule sur deux rapports de boîte distincts, et une machine électrique secondaire (HSG), capable fournir un couple de compensation à la roue pendant les changements de rapport de la machine principale.

L'invention s'applique en particulier aux groupes motopropulseurs (GMP) de ce type, dans lesquels l'engagement et le désengagement des rapports est assuré par des systèmes de couplage pilotés sans synchroniseur, à crabots ou dents plates, appelés aussi « clabots », mobiles axialement sur un arbre. Les crabots sont pilotés par l'intermédiaire de fourchettes de commande en direction de pignons de vitesses fixes axialement, tournant fou sur leur arbre. L'engagement des crabots mobiles sur les pignons, met en prise l'arbre et le pignon, pour transmettre le couple aux roues sur le rapport de transmission engagé.

La publication FR 3 007 696, à laquelle on pourra se référer, décrit une architecture de transmission hybride à trois arbres et deux machines électriques, dont une machine principale (ME) et une machine secondaire (HSG). La transmission utilise trois systèmes de couplage à crabots spécifiques. C'est une boîte de vitesses de type robotisée (BVR), possédant un comportement mécanique similaire à une boîte manuelle. Les changements de rapport s'effectuent de façon automatisée, à l'aide d'un système d'actionnement permettant d'engager et de désengager les crabots.

Les deux machines électriques (ME) et (HSG) sont alimentées par la même batterie, qui fournit la quantité d'énergie nécessaire au fonctionnement du GMP. Cette quantité dépend du fonctionnement de chaque machine (motrice ou génératrice), et du niveau de puissance qui est demandé à la batterie par chacune d'elles. Ce niveau dépend de la demande de puissance à la roue, et de la répartition du couple entre les machines électriques et le moteur thermique. La puissance électrique fournie par la batterie est limitée par sa tension minimum, par sa température, et par son niveau de charge (SOC pour « State Of Charge » en anglais). La puissance électrique disponible dans la batterie détermine l'apport potentiel maximum en couple de celle-ci dans chaque situation. Cet apport est limité entre un couple maximum et un couple minimum, pour chaque machine électrique. Il prend en compte son mode d'utilisation (motrice ou génératrice).

Dans le but d'augmenter la durée de vie de la batterie, et de l'exploiter le plus longtemps possible, les limitations des couples effectifs min/max des machines électriques sont généralement calculées « à long terme », par exemple sur des prévisions à au moins 20 secondes. Les valeurs prises en compte pour calculer les limitations min/max de puissance mécanique (et de couple) des machines électriques, imposées par la batterie sont calculées en fonction de son potentiel d'énergie à long terme, et du mode d'utilisation de chaque machine.

Pendant les changements de rapport, plusieurs phénomènes peuvent se produire et être perçus désagréablement par les utilisateurs, comme des trous d'accélération, des chocs ou à-coups, des ralentissements, des effets de « salut », etc.

Les limitations de couple min/max imposées aux machines électriques permettent dans une certaine mesure de pallier ces phénomènes. En effet, un trou d'accélération est généralement lié au fonctionnement d'une machine électrique en sous-performance. C'est le cas pour une machine qui est pilotée sur son couple maximum, si la puissance qui lui est allouée par la batterie est insuffisante pour assurer l'accélération demandée par le conducteur, notamment si cette puissance est limitée en fonction d'une prévision à trop long terme de l'état de la batterie.

Par la publication FR 2 954 153, on sait compenser une perte de couple de traction d'un moteur thermique par une machine électrique, tout en modulant le couple délivré par celle-ci par des paramètres dépendant de variables d'état du véhicule.

La présente invention vise à améliorer la qualité des changements de vitesse, perçue par les utilisateurs du véhicule.

Dans ce but, elle prévoit que, en anticipation d'un changement de rapport de la machine principale, on impose par avance une nouvelle limitation des couples minimum et maximum des deux machines électriques plus stricte que celle du rapport établi afin d'assurer sans discontinuité pendant le changement de rapport la synchronisation de la machine principale sur le nouveau rapport et la compensation du couple par la machine secondaire, les limitations des consignes de couple des machines électriques étant calculées en fonction d'un différentiel de régime anticipé basé sur la variation de régime à effectuer par la machine principale pour se synchroniser sur le nouveau rapport.

Suivant une forme particulière de l'invention, l'anticipation du changement de rapport est déterminée à partir d'une interprétation de la volonté du conducteur.

D'autres caractéristiques et avantages de l'invention, ressortiront clairement à la lecture de la description suivante d'un mode de réalisation non limitatif de celle-ci, en se reportant aux dessins annexés, sur lesquels :

- la figure 1 est un exemple d'architecture GMP hybride simplifié
- la figure 2, regroupe ses courbes de passage de vitesses,
- la figure 3, illustre les contraintes de limitation de couple, habituelles lors des passages de vitesses,
- la figure 4 résume la stratégie, et
- la figure 5 illustre les évolutions du couple et de la puissance pendant le passage.

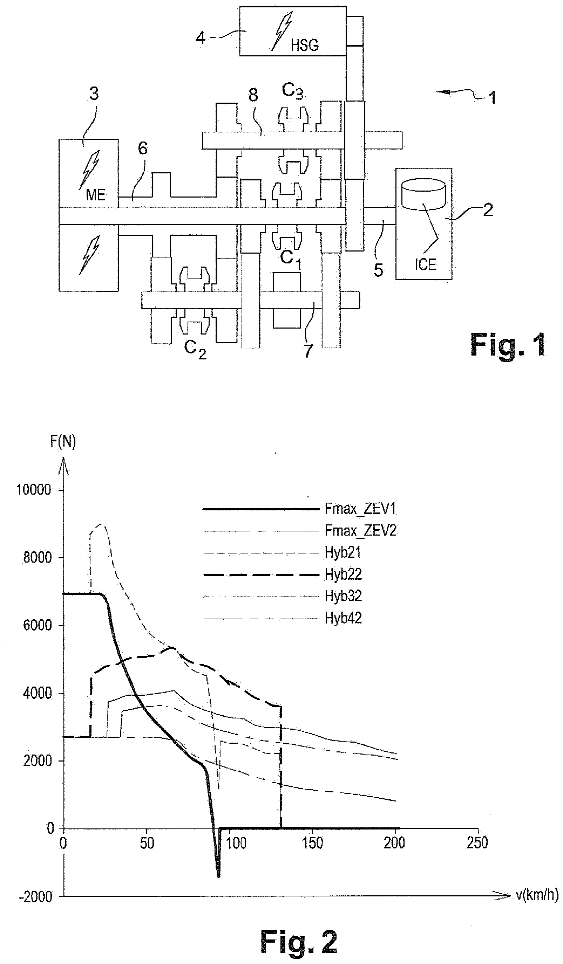

La figure 1 est un schéma fonctionnel de groupe motopropulseur (GMP) hybride 1, à trois arbres et deux machines électriques, utilisant trois systèmes de couplage à crabots, dont le fonctionnement est illustré par la publication citée. Le GMP 1 comporte trois actionneurs (moteur thermique 2, machine électrique principale 3 (ME), machine électrique secondaire 4 (HSG)), un arbre primaire plein 5 relié au moteur thermique, un arbre primaire creux 6 relié à la machine électrique principale 3, un arbre secondaire 7, et un arbre de renvoi 8 relié à la machine électrique secondaire 4. Les rapports sont enclenchés par trois coupleurs à crabots C1, C2, C3, dépourvus de synchroniseurs mécaniques :

La boîte de vitesses regroupe le couple du moteur thermique 1 de la machine électrique principale 3, et de la machine électrique secondaire 4 sur l'arbre de sortie commun 7, en direction des roues du véhicule. Les changements de rapport s'effectuent sous le contrôle des trois coupleurs à crabots C1, C2, C3, disposés respectivement sur l'arbre primaire plein 5, sur l'arbre secondaire 6 et sur l'arbre de transfert 8. Le premier coupleur, dit coupleur primaire C1, placé sur l'arbre primaire plein 5, permet d'enclencher un rapport thermique ICE4 long à droite, et de coupler les deux arbres primaires à gauche. Le deuxième coupleur, dit coupleur secondaire C2, placé sur l'arbre secondaire, permet d'enclencher deux rapports électriques EV1 et EV2. Le troisième coupleur, dit coupleur de transfert C3, placé sur l'arbre de renvoi 8, permet de transférer le couple de la machine électrique secondaire sur l'arbre secondaire 7 (à droite), ou sur l'arbre primaire creux 6 (à gauche).

La boîte présente deux rapports, dits électriques, pour le mouvement issu de la machine électrique principale ME, et quatre rapports, dits thermiques, pour le mouvement issu de l'ensemble de la machine électrique secondaire (HSG) et du moteur thermique (ICE) s'il est présent. Leur combinaison permet à la boîte de disposer de 15 vitesses. Chaque vitesse transmet une force maximum à la roue en, fonction de la vitesse de déplacement du véhicule. A titre d'exemple, on a représenté sur la figure 2 les courbes de passage pour certains d'entre eux. La vitesse de déplacement du véhicule V est exprimée en kilomètres/heure. La force aux roues maximale F en fonction de la vitesse, est exprimée en Newton (N), pour les deux vitesses électriques (ZE1 et ZE2), et quatre vitesses hybrides, appelés respectivement Hyb21, Hyb22, Hyb32, Hyb42. Le premier chiffre indique le rapport thermique de la boîte de vitesses. Le deuxième indique son rapport électrique.

Comme indiqué plus haut, les valeurs prises en compte pour calculer les limitations min/max de puissance mécanique des machines électriques, sont avantageusement une image des limitations imposées par la batterie en fonction de son potentiel d'énergie à « *long terme* », et du mode d'utilisation de chaque machine. Une première mesure pour améliorer la qualité des passages, consiste à déroger aux limitations basées sur l'état « *à long terme* » (environ 20s) de la batterie, pour basculer momentanément sur une prévision à plus court terme (environ 2 secondes). Lorsque le contrôleur de la boîte prend le contrôle de ses actionneurs pour réaliser un passage de vitesses, le potentiel de puissance de la batterie se positionne sur les limitations « *court terme* », moins contraignantes que les précédentes. On profite ainsi des performances du système, pour améliorer la qualité de passage, et réaliser la transition le plus rapidement possible.

Toutefois, si le changement de limitation s'effectue au moment où le contrôleur de la boîte de vitesses prend le contrôle du GMP pour réaliser le passage, il peut provoquer des sauts de couple en réponse au changement brusque de la consigne de couple appliquée sur les machines électriques, en particulier sur celle qui doit assurer la compensation de couple pendant la mise au neutre d'un coupleur. De tels sauts de couple, se traduisent par des chocs qui nuisent à l'agrément de conduite du véhicule, en dépit de l'objectif recherché.

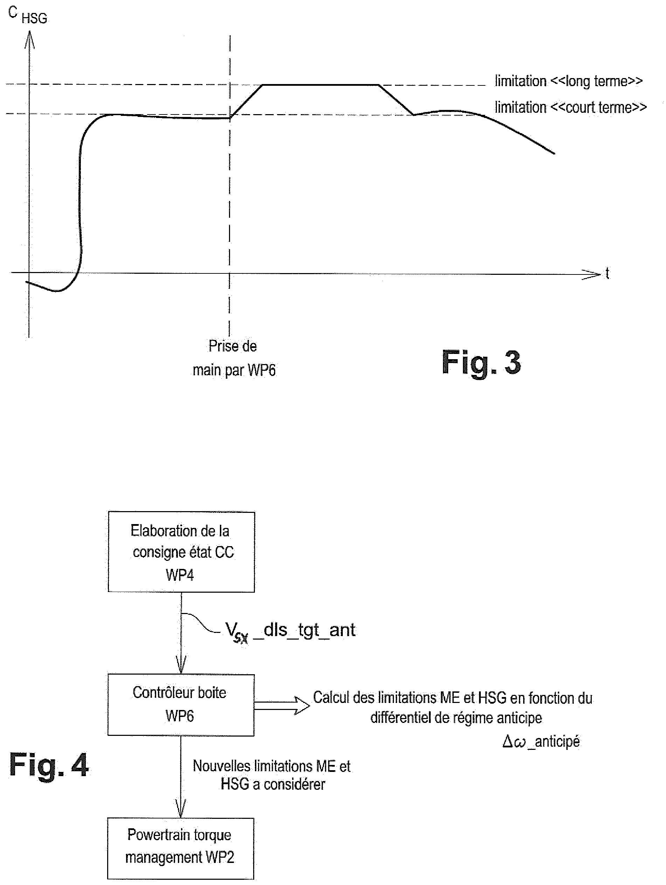

Dans l'exemple illustré par les figures 1 et 2, un passage de la vitesse « Hyb22 » à « Hyb21 », consiste à changer de rapport électrique en mode hybride, en restant sur le deuxième rapport thermique. Pendant le changement, la machine électrique secondaire (HSG) assure avec le moteur thermique la réalisation du couple demandé à la roue. La machine électrique principale(ME) réalise la transition, c'est-à-dire sa synchronisation sur le régime du nouveau

EP 3 634 797 B1

rapport entre le dé-crabotage d'un pignon et le crabotage d'un autre pignon. En fonction de la puissance demandée à la roue, la machine secondaire HSG peut être saturée, même sur les limitations « *court terme* » de la batterie. Ce phénomène est illustré par la figure 3, où le couple de compensation fourni par la machine secondaire $C_{HSG}$ est saturé par la limitation « *court terme* », après la prise de contrôle du calculateur de la boîte WP6.

Si la machine principale (ME), qui est en phase de synchronisation de régime, ne dispose pas de puissance suffisante, cette phase est allongée. A l'inverse, une diminution du couple de compensation visant à raccourcir la phase de synchronisation, augmente le choc ressenti par les usagers.

L'invention cherche à optimiser le potentiel de puissance fourni par la batterie, et le calcul des couples de saturation (minimum et maximum) des machines électriques pendant les changements de vitesse.

La méthode proposée repose sur une anticipation du basculement des limitations « *long terme* » vers les limitations « *court terme* » imposées par l'état prévisionnel de la batterie. Cette méthode introduit un nouveau procédé d'élaboration d'une consigne de couple aux machines électriques d'un groupe motopropulseur de véhicule, comportant au moins une boîte de vitesses à crabots pilotés, une machine électrique principale pouvant transmettre du couple aux roues du véhicule sur deux rapports de boîte distincts, et une machine électrique secondaire capable fournir un couple de compensation à la roue pendant les changements de rapport de la machine principale.

Dans le nouveau procédé, les couples maximum et minimum imposés aux machines électriques en rapport établi, sont calculés en fonction d'un état prévisionnel à terme d'une batterie d'alimentation commune (« *limitation court terme* » et « *limitation long terme* »). Mais il est prévu de calculer en plus, des nouvelles valeurs de couple effectif min/max des machines électriques, qui permettent de rendre le passage de rapport plus lisse, en réduisant le trou d'accélération du changement de rapport, tout en respectant les contraintes de la batterie.

Conformément à l'invention, en anticipation d'un changement de rapport de la machine principale (ME), on impose par avance une nouvelle limitation des couples des deux machines électriques, plus stricte que celle du rapport établi, afin d'assurer sans discontinuité pendant le changement de rapport, la synchronisation de la machine principale (ME) sur le nouveau rapport, et la compensation du couple par la machine secondaire (HSG) .

Un nouveau mode de calcul des saturations min/max du couple effectif des deux machines électriques ME et HSG utilisées lors d'un changement de rapport, est proposé. Il permet de résorber les sauts trop élevés de consigne de couple, et d'améliorer la répartition de la puissance de la batterie entre les deux machines électriques.

Conformément à l'invention, le niveau de puissance requis au cours de la transition, est prévu avant le début du passage, et plus précisément avant la prise de contrôle du contrôleur de boîte WP6 sur les actionneurs. La prévision s'effectue par le calcul d'un écart de régime anticipé sur lequel on positionne le niveau de puissance nécessaire pour la phase de synchronisation. Les limitations qui sont imposées par la batterie (calculées en régime établi par le calculateur principal du GMP « *Powertrain Torque Management* » (WP2), et envoyées au contrôleur de boîte (WP6), ont grâce à l'invention une évolution plus lisse, permettant d'éviter les différents changements instantanés du couple effectif.

L'anticipation du changement de rapport, est déterminée à partir d'une interprétation de la volonté du conducteur. Comme indiqué sur la figure 4, le calculateur de lois de passage du GMP (WP4) est responsable de la consigne d'état de la chaîne cinématique. Il impose au calculateur de boîte WP6 une demande de changement de rapport anticipée « *consigne de driveline state anticipée* », *Vsx_dls_tgt_ant* », par interprétation de la volonté du conducteur. A partir de la consigne *Vsx_dls_tgt_ant* », WP6 calcule un différentiel de régime anticipé *Δω_anticipé.* Sur la base de celui-ci, il établit les consignes de limitation de couple des machines électriques. Ces consignes sont envoyées au calculateur de couple du GMP « *Powertrain torque management* » (WP2), auquel elles s'imposent avant le début du passage.

Dans l'exemple cité plus haut, d'un passage de la vitesse Hyb22 à Hyb21, on cherche à synchroniser la machine électrique principale (ME) d'un régime X correspondant au rapport EV2, à un régime Y correspondant au rapport EV1. La consigne *Vsx_dls_tgt_ant* est équivalente au mode cinématique Hyb21. Le calcul du différentiel de régime anticipé, se base sur la variation de régime à réaliser pour pouvoir actionner le rapport anticipé :

$$\Delta\omega\_anticipé = \omega\_(cible\_EV1) - \omega\_(courant\_EV2)$$

Le différentiel de régime anticipé *Δω_anticipé, calculé* à partir de la consigne *Vsx_dls_tgt_ant,* reste constant pendant le passage : il varie uniquement avec la vitesse du véhicule, qui évolue elle-même très lentement sur un horizon de 2 secondes dans l'exemple considéré.

En fonction de *Δω_anticipé,* le calculateur de boîte (WP6) calcule les limitations min/max de couples effectifs des deux machines HSG et ME *Vxx_min/max_esnd_ecrk-tqe_limit,* permettant de réaliser le changement de rapport anticipé si celui-ci est confirmé, tout en assurant une compensation du couple à la roue au bon niveau d'agrément. Ces limitations sont prises en compte par le calculateur de couple du GMP « *Powertrain torque management* » (WP2) qui les impose aux machines électriques.

L'unité de calcul de la boîte de vitesses (WP6) limite par avance les couples des machines électriques, avant le début de la synchronisation effectuée sous son contrôle. Lorsque le changement de rapport est confirmé, il n'y a pas

4

de discontinuité dans les limitations de couple, car le niveau de puissance électrique requis par les couples limités reste inférieur aux couples maximum et minimum imposés aux deux machines électriques en rapport établi.

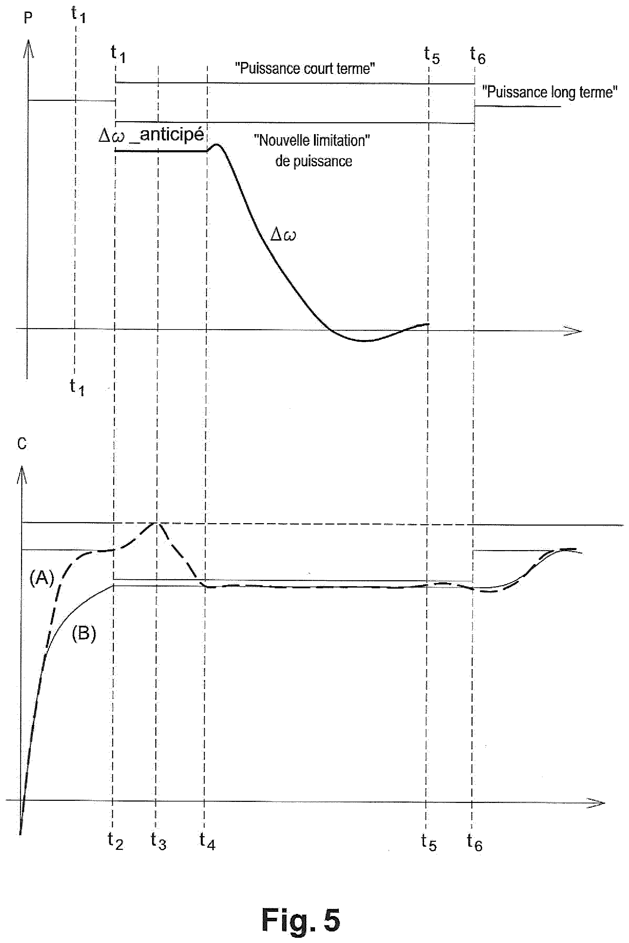

La figure 5 illustre le déroulement des calculs effectués dans l'architecture logicielle du contrôleur de la boîte de vitesses WP6. Les dates indiquées en abscisse sur les deux graphes sont respectivement :

- **t1 :** élaboration de la consigne de changement de rapport par le calculateur du GMP (WP4),
- **t2** : anticipation de la prise de main du contrôleur de boîte WP6,
- **t3** : prise de main réelle par le contrôleur de boîte
- **t4** : début de la synchronisation,
- **t5** : début de la reprise de contrôle par le calculateur GMP,
- **t6 :** fin de cette reprise de contrôle.

Sur le graphe puissance, on a représenté le niveau de *« limitation long terme »* s'imposant avant **t1,** et après **t6.** Le niveau de limitation court terme, supérieur à celui-ci, est également indiqué. Le différentiel de régime anticipé $\Delta\omega$_**anticipé,** calculé à partir de **t1,** est appliqué de **t2** à **t4.** Il détermine une « *nouvelle limitation de puissance* », qui se substitue entre **t2** et **t6,** à la puissance de « *limitation long terme* » imposée par la batterie. La synchronisation, opérée entre **t4** et **t5,** fait disparaître le différentiel de régime.

Le pic de couple imposé par le changement instantané des consignes de couple effectif entre **t2** et **t4** disparaît. La diminution de couple de la machine effectuant la compensation est évitée. On effectue une bonne répartition de la puissance disponible de la batterie, entre les deux machines électriques.

En conclusion, l'invention permet d'optimiser le potentiel de puissance fourni par la batterie, et le calcul des saturations min/max des machines électriques à partir des limitations de puissance long et court terme, imposées par la batterie. Elle s'appuie sur la prise en compte par le contrôleur de boîte de vitesses, des limitations de puissance de la batterie et des saturations des machines électriques. De ce fait, elle est facile à mettre en œuvre, et n'introduit aucun coût supplémentaire.

**Revendications**

**1.** Procédé d'élaboration d'une consigne de couple aux machines électriques (ME, HSG) d'un groupe motopropulseur (GMP) de véhicule, comportant au moins une boîte de vitesses à crabots pilotés, une machine électrique principale (ME) pouvant transmettre du couple aux roues du véhicule sur deux rapports de boîte distincts, et une machine électrique secondaire (HSG) capable fournir un couple de compensation à la roue pendant les changements de rapport de la machine principale, dans lequel les couples maximum et minimum imposés aux deux machines électriques en rapport établi sont calculés en fonction d'un état prévisionnel à terme d'une batterie d'alimentation commune, **caractérisé en ce que**, en anticipation d'un changement de rapport de la machine principale (ME), on impose par avance une nouvelle limitation des couples minimum et maximum des deux machines électriques plus stricte que celle du rapport établi afin d'assurer sans discontinuité pendant le changement de rapport la synchronisation de la machine principale (ME) sur le nouveau rapport et la compensation du couple par la machine secondaire (HSG), les limitations des consignes de couple des machines électriques étant calculées en fonction d'un différentiel de régime anticipé basé sur la variation de régime à effectuer par la machine principale pour se synchroniser sur le nouveau rapport.

**2.** Procédé d'élaboration d'une consigne de couple selon la revendication 1, **caractérisé en ce que** l'anticipation du changement de rapport est déterminée à partir d'une interprétation de la volonté du conducteur.

**3.** Procédé d'élaboration d'une consigne de couple selon la revendication 1 ou 2, **caractérisé en ce que** l'unité de calcul du GMP (WP4) interprétant la volonté du conducteur, envoie une demande de changement de rapport anticipée à l'unité de calcul de la boîte de vitesses (WP6).

**4.** Procédé d'élaboration d'une consigne de couple selon la revendication 3, **caractérisé en ce que** l'unité de calcul de la boîte de vitesses (WP6) limite par avance les couples des machines électriques, avant le début de la synchronisation.

**5.** Procédé d'élaboration d'une consigne de couple selon la revendication 4, **caractérisé en ce que** les couples limités requièrent un niveau de puissance électrique qui reste inférieur à celui qui est requis par les couples maximum et minimum imposés aux deux machines électriques en rapport établi.

**6.** Procédé d'élaboration d'une consigne de couple selon la revendication 4 ou 5, **caractérisé en ce que** les couples limités sont calculés par l'unité de calcul de la boîte de vitesses (WP6) avant qu'elle prenne le contrôle sur les machines électriques.

**7.** Groupe motopropulseur (GMP) électrique de véhicule, comportant au moins une boîte de vitesses à crabots pilotés, une machine électrique principale (ME) pouvant transmettre du couple aux roues du véhicule sur deux rapports de boîte distincts, et une machine électrique secondaire (HSG) capable fournir un couple de compensation à la roue pendant les changements de rapport de la machine principale, **caractérisé en ce que** en anticipation d'un changement de rapport de la machine principale (ME), on élabore une consigne de couple aux machines électriques (ME, HSG) conformément à l'une des revendications 1 à 6.

**8.** Groupe motopropulseur (GMP) hybride de véhicule, comportant au moins une boîte de vitesses à crabots pilotés, un moteur thermique, une machine électrique principale (ME) pouvant transmettre du couple aux roues du véhicule sur deux rapports de boîte distincts, et une machine électrique secondaire (HSG) capable fournir un couple de compensation à la roue pendant les changements de rapport de la machine principale, **caractérisé en ce que** en anticipation d'un changement de rapport de la machine principale (ME), on élabore une consigne de couple aux machines électriques (ME, HSG) conformément à l'une des revendications 1 à 6.

**Patentansprüche**

**1.** Verfahren zur Erzeugung eines Drehmomentsollwerts für elektrische Maschinen (ME, HSG) eines Antriebsstrangs (GMP) eines Fahrzeugs, umfassend mindestens ein Getriebe mit angesteuerten Klauen, eine elektrische Hauptmaschine (ME), die Drehmoment an die Räder des Fahrzeugs über zwei verschiedene Gänge übertragen kann, und eine elektrische Nebenmaschine (HSG), die in der Lage ist, ein Ausgleichsdrehmoment an das Rad während der Gangwechsel der Hauptmaschine abzugeben, wobei die größten und kleinsten Drehmomente, die den beiden elektrischen Maschinen bei eingelegtem Gang aufgeprägt werden, in Abhängigkeit von einem voraussichtlichen langfristigen Zustand einer gemeinsamen Speisebatterie berechnet werden, **dadurch gekennzeichnet, dass** unter Antizipierung eines Gangwechsels der Hauptmaschine (ME) im Voraus eine neue Begrenzung der kleinsten und größten Drehmomente der beiden elektrischen Maschinen aufgeprägt wird, die strikter als die des eingelegten Gangs ist, um während des Gangwechsels unterbrechungsfrei die Synchronisierung der Hauptmaschine (ME) auf den neuen Gang und den Ausgleich des Drehmoments durch die Nebenmaschine (HSG) zu gewährleisten, wobei die Begrenzungen der Drehmomentsollwerte der elektrischen Maschinen in Abhängigkeit von einer antizipierten Drehzahldifferenz berechnet wird, die auf der Drehzahländerung beruht, die von der Hauptmaschine vorzunehmen ist, um sich auf den neuen Gang zu synchronisieren.

**2.** Verfahren zur Erzeugung eines Drehmomentsollwerts nach Anspruch 1, **dadurch gekennzeichnet, dass** die Antizipierung des Gangwechsels ausgehend von einer Interpretation des Wunsches des Fahrers bestimmt wird.

**3.** Verfahren zur Erzeugung eines Drehmomentsollwerts nach Anspruch 1 oder 2, **dadurch gekennzeichnet, dass** die Recheneinheit des GMP (WP4), die den Wunsch des Fahrers interpretiert, eine antizipierte Gangwechselanforderung an die Recheneinheit des Getriebes (WP6) sendet.

**4.** Verfahren zur Erzeugung eines Drehmomentsollwerts nach Anspruch 3, **dadurch gekennzeichnet, dass** die Recheneinheit des Getriebes (WP6) die Drehmomente der elektrischen Maschinen im Voraus begrenzt, vor dem Beginn der Synchronisierung.

**5.** Verfahren zur Erzeugung eines Drehmomentsollwerts nach Anspruch 4, **dadurch gekennzeichnet, dass** die begrenzten Drehmomente ein elektrisches Leistungsniveau erfordern, das geringer bleibt als dasjenige, das von den größten und kleinsten Drehmomenten gefordert wird, die den beiden elektrischen Maschinen bei eingelegtem Gang aufgeprägt werden.

**6.** Verfahren zur Erzeugung eines Drehmomentsollwerts nach Anspruch 4 oder 5, **dadurch gekennzeichnet, dass** die begrenzten Drehmomente von der Recheneinheit des Getriebes (WP6) berechnet werden, bevor sie die Kontrolle über die elektrischen Maschinen übernimmt.

**7.** Elektrischer Antriebsstrang (GMP) eines Fahrzeugs, umfassend mindestens ein Getriebe mit angesteuerten Klauen, eine elektrische Hauptmaschine (ME), die Drehmoment an die Räder des Fahrzeugs über zwei verschiedene Gänge übertragen kann, und eine elektrische Nebenmaschine (HSG), die in der Lage ist, ein Ausgleichsdrehmoment an das Rad während der Gangwechsel der Hauptmaschine zu übertragen, **dadurch gekennzeichnet, dass** unter Antizipierung eines Gangwechsels der Hauptmaschine (ME) ein Drehmomentsollwert für die elektrischen Maschinen (ME, HSG) nach einem der Ansprüche 1 bis 6 erzeugt wird.

8.  Hybridantriebsstrang (GMP) eines Fahrzeugs, umfassend mindestens ein Getriebe mit angesteuerten Klauen, einen Verbrennungsmotor, eine elektrische Hauptmaschine (ME), die Drehmoment an die Räder des Fahrzeugs über zwei verschiedene Gänge übertragen kann, und eine elektrische Nebenmaschine (HSG), die in der Lage ist, ein Ausgleichsdrehmoment an das Rad während der Gangwechsel der Hauptmaschine zu übertragen, **dadurch gekennzeichnet, dass** unter Antizipierung eines Gangwechsels der Hauptmaschine (ME) ein Drehmomentsollwert für die elektrischen Maschinen (ME, HSG) nach einem der Ansprüche 1 bis 6 erzeugt wird.

## Claims

1.  Method for generating a torque setpoint for the electric machines (EM, HSG) of a vehicle powertrain (PT), comprising at least one controlled-claw gearbox, a main electric machine (EM) capable of transmitting torque to the wheels of the vehicle on two distinct gearbox ratios, and a secondary electric machine (HSG) capable of supplying compensatory torque to the wheel during the changes in gear ratio of the main machine, wherein the maximum and minimum torques imposed on the two electric machines with an established ratio are calculated on the basis of an ultimate predicted state of a common power supply battery, **characterized in that**, in anticipation of a change in gear ratio of the main machine (EM), a new limit, stricter than that of the established ratio, is imposed in advance on the minimum and maximum torques of the two electric machines so as to ensure that the main machine (EM) synchronizes to the new ratio without discontinuity during the change in ratio with compensation for the torque by the secondary machine (HSG), the limits on the torque setpoints of the electric machines being calculated as a function of an anticipated speed differential which is based on the variation in speed that the main machine needs to achieve in order to synchronize to the new ratio.

2.  Method for generating a torque setpoint according to Claim 1, **characterized in that** the anticipated change in ratio is determined on the basis of an interpretation of the wishes of the driver.

3.  Method for generating a torque setpoint according to Claim 1 or 2, **characterized in that** the PT management unit (WP4) that interprets the wishes of the driver sends an anticipated ratio-change demand to the gearbox management unit (WP6).

4.  Method for generating a torque setpoint according to Claim 3, **characterized in that** the gearbox management unit (WP6) limits the torques of the electric machines in advance, before the start of the synchronization.

5.  Method for generating a torque setpoint according to Claim 4, **characterized in that** the limited torques require a level of electrical power that remains below that required by the maximum and minimum torques imposed on the two electric machines in the established ratio.

6.  Method for generating a torque setpoint according to Claim 4 or 5, **characterized in that** the limited torques are calculated by the gearbox management unit (WP6) before it takes control of these electric machines.

7.  Vehicle electric powertrain (PT), comprising at least one controlled-claw gearbox, a main electric machine (EM) capable of transmitting torque to the wheels of the vehicle on two distinct gearbox ratios, and a secondary electric machine (HSG) capable of supplying compensatory torque to the wheel during the changes in gear ratio of the main machine, **characterized in that**, in anticipation of a change in ratio of the main machine (EM), a torque setpoint for the electric machines (EM, HSG) is generated in accordance with one of Claims 1 to 6.

8.  Vehicle hybrid powertrain (PT) comprising at least one controlled-claw gearbox, a combustion engine, a main electric machine (EM) capable of transmitting torque to the wheels of the vehicle on two distinct gearbox ratios, and a secondary electric machine (HSG) capable of supplying compensatory torque to the wheel during the changes in gear ratio of the main machine, **characterized in that**, in anticipation of a change in ratio of the main machine (EM), a torque setpoint for the electric machines (EM, HSG) is generated in accordance with one of Claims 1 to 6.

Fig. 1

Fig. 2

**Fig. 3**

limitation <<long terme>>

limitation <<court terme>>

$C_{HSG}$

t

Prise de
main par WP6

Elaboration de la
consigne état CC
WP4

$V_{SX}\_dls\_tgt\_ant$

Contrôleur boite
WP6

Calcul des limitations ME et HSG en fonction du
différentiel de régime anticipe

$\Delta\omega\_anticipé$

Nouvelles limitations ME et
HSG a considérer

Powertrain torque
management WP2

**Fig. 4**

**Fig. 5**

## RÉFÉRENCES CITÉES DANS LA DESCRIPTION

**Documents brevets cités dans la description**

- FR 3007696
- FR 2954153